# EUROPEAN PATENT SPECIFICATION

(11) **EP 3 849 162 B1**
(45) Date of publication and mention of the grant of the patent: **15.02.2023**
(21) Application number: 19857431.1
(22) Date of filing: 12.07.2019
(51) Int. Cl.: H04M 1/02, G06F 1/16, H04N 5/225, G08C 17/02, H04M 1/72412

(54) **MOBILE TERMINAL**
MOBILES ENDGERÄT
TERMINAL MOBILE

(30) Priority: 06.09.2018 CN 201821459213 U
(43) Date of publication of application: 14.07.2021
(73) Proprietor: GUANGDONG OPPO MOBILE TELECOMMUNICATIONS CORP., LTD., Dongguan Guangdong 523860 (CN)
(72) Inventor: LI, Jie, Dongguan, Guangdong 523860 (CN)
(74) Representative: Penza, Giancarlo
(86) International application number: PCT/CN2019/095800
(87) International publication number: WO 2020/048233

(56) References cited:
- CN-A- 104 363 316
- CN-U- 206 413 044
- KR-A- 20060 018 357
- US-A1- 2005 124 381
- US-A1- 2015 156 898
- US-A1- 2016 028 186
- US-A1- 2017 351 164

## Description

### TECHNICAL FIELD

The present disclosure relates to the field of mobile terminal technologies, and more particularly, to a mobile terminal.

### BACKGROUND

Mobile terminals (phones, tablets, etc.) are generally equipped with cameras, which are configured to provide functions such as video calling and shooting. However, shooting scenarios of the camera are relatively monotonous.

US2005124381A1 discloses a mobile terminal including a first body, a second body slidingly mounted to the first body, and a locking unit; US2015156898A1 discloses mobile terminal including a camera module mountable to and demountable from the loading recess formed in an outer surface of the case; US2016028186A1 discloses an ejecting mechanism; KR20060018357A discloses a battery pack locking device for a portable terminal.

### SUMMARY

Based on the above, the disclosure provides a mobile terminal. The invention is defined by features of independent claims. Preferred embodiments of the inventions are defined by features of dependent claims.

The locking mechanism comprises a resisting member and a bolt, wherein the resisting member is rotatably connected to the terminal device and abuts against the bolt; when the image capturing device is mounted in the mounting recess, the resisting member is configured to rotate relative to the terminal device thereby driving the bolt to move to a first position and a second position, the bolt is engaged with the engaging slot and the image capturing device is locked to the terminal device when the bolt is at the first position, the bolt exits from the engaging slot and the image capturing device is detachable from the mounting recess when the bolt is at the second position; the image capturing device is communicatively connected with the terminal device after the image capturing device being detached from the mounting recess.

### BRIEF DESCRIPTION OF THE DRAWINGS

In order to more clearly describe the technical solutions of the disclosure, the following briefly introduces the drawings needed to be used in the description of the embodiments. Obviously, the drawings in the following description only illustrate some embodiments of the disclosure, and other drawings can be obtained for those skilled in the art, based on these drawings without any creative work.
FIG. 1 is a perspective view of a mobile terminal, wherein an image capturing device of the mobile terminal is mounted on a terminal device according to an embodiment;
FI.G. 2 is another perspective view of the mobile terminal as shown in FIG. 1, wherein the image capturing device of the mobile terminal is mounted on the terminal device;
FIG. 3 is a perspective view showing the image capturing device of the mobile terminal shown in FIG. 2 being detached from the terminal device;
FIG. 4 is an exploded view of the image capturing device of the mobile terminal shown in FIG. 3;
FIG. 5 is a perspective view of the image capturing device of the mobile terminal shown in FIG. 4 after removing a casing;
FIG. 6 is a front view showing a locking mechanism of the mobile terminal shown in FIG. 2 is at a first position;
FIG. 7 is an enlarged schematic diagram of the position A of the mobile terminal shown in FIG. 6;
FIG. 8 is a schematic diagram showing an application scene of the imaging capturing device of the mobile terminal shown in FIG. 3;
Fig. 9 is a front view of the locking mechanism of the mobile terminal shown in FIG. 5 being covered with a cover plate.

### DETAILED DESCRIPTION OF PREFERRED EMBODIMENTS

In order to facilitate the understanding of the disclosure, the following will make a more comprehensive description of the disclosure with reference to the relevant drawings. The drawings illustrate preferred embodiments of the disclosure. However, this disclosure can be implemented in many different manners and is not limited to the following described embodiments. On the contrary, the purpose of providing these embodiments is to make the understanding of the disclosure more thorough and comprehensive.

The wording "terminal device" refers to, but is not limited to, a device capable of receiving and/or sending communication signals via one or more of the following communicating ways:
(1) via wired lines, such as Public Switched Telephone Networks (PSTN), Digital Subscriber Lines (DSL), digital cables, and direct cable connections;
(2) via a wireless interface, such as a cellular network, a Wireless Local Area Network (WLAN), a digital TV network (e.g., DVB-H network), a satellite network, a AM-FM broadcast transmitter.

A terminal device, which is configured to communicate through a wireless interface, may be referred to as a "mobile terminal". Examples of the mobile terminal include but are not limited to the following electronic devices:
(1) a satellite phone or a cellular phone;
(2) Personal Communications System (PCS) terminals, capable of integrating cellular radio telephones, data processing and fax, and data communicating capabilities;
(3) a radio telephone, a pager, an Internet/Intranet access, a Web browser, a notebook, a calendar, a personal digital assistants (PDA) equipped with a Global Positioning System (GPS) receiver;
(4) a conventional laptop and/or palmtop receiver;
(5) a conventional laptop and/or palmtop radio telephone transceiver; etc.

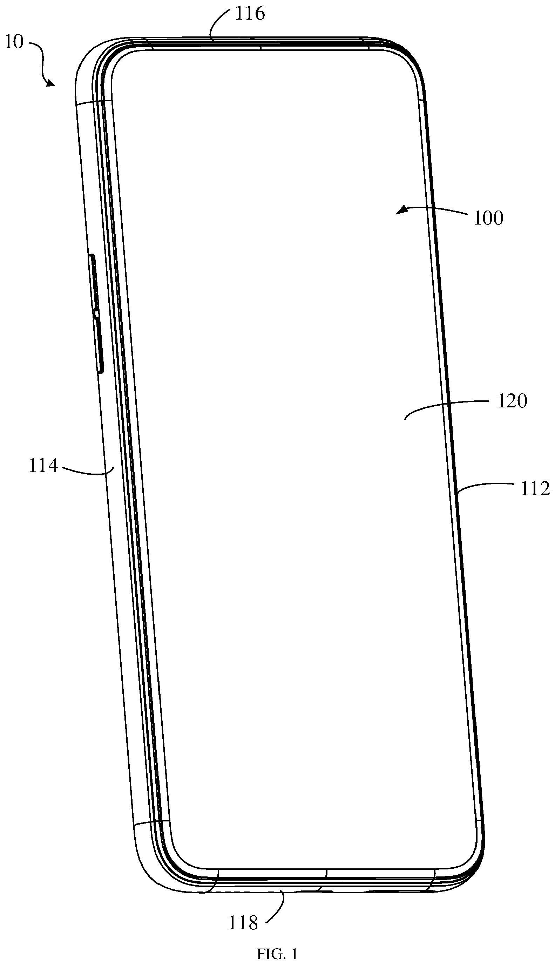

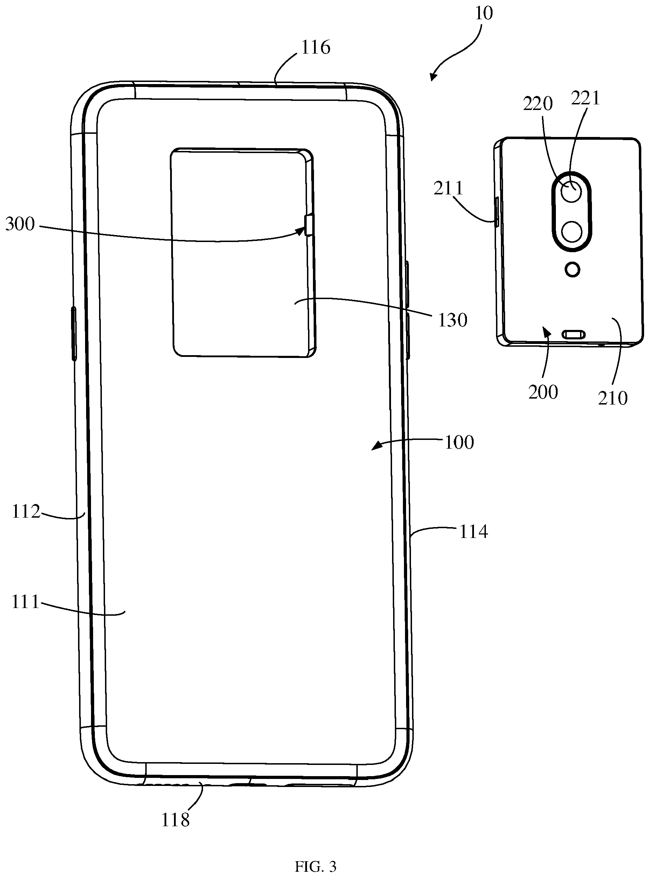

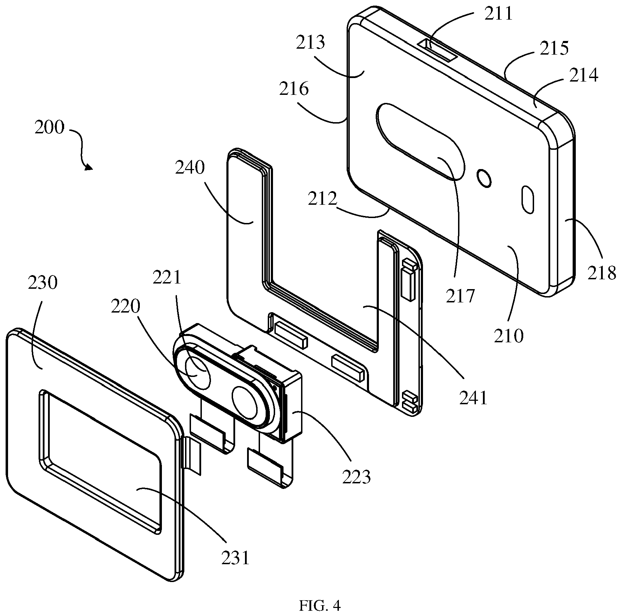

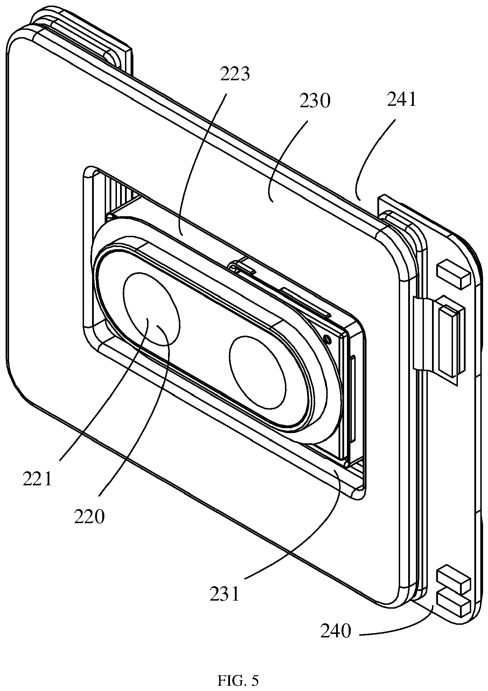

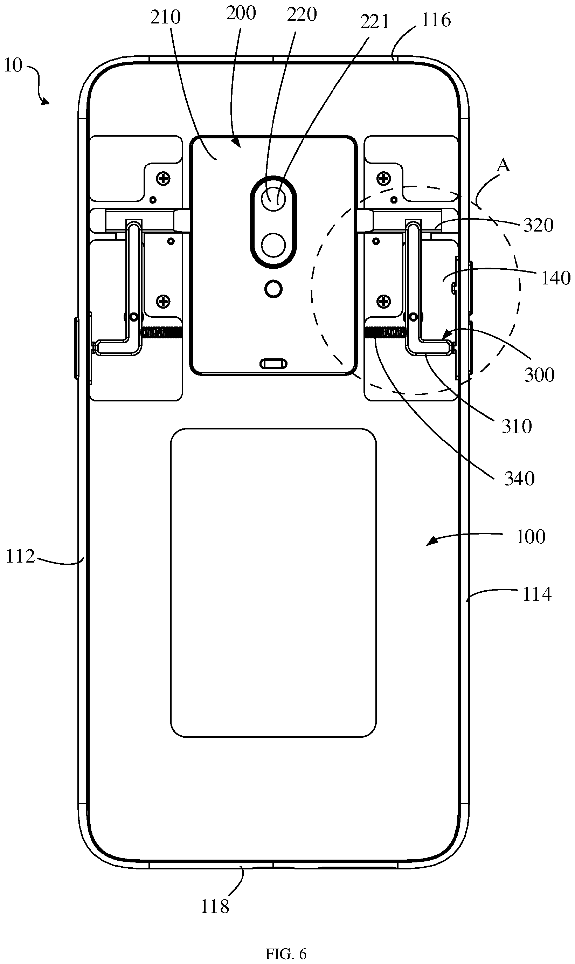

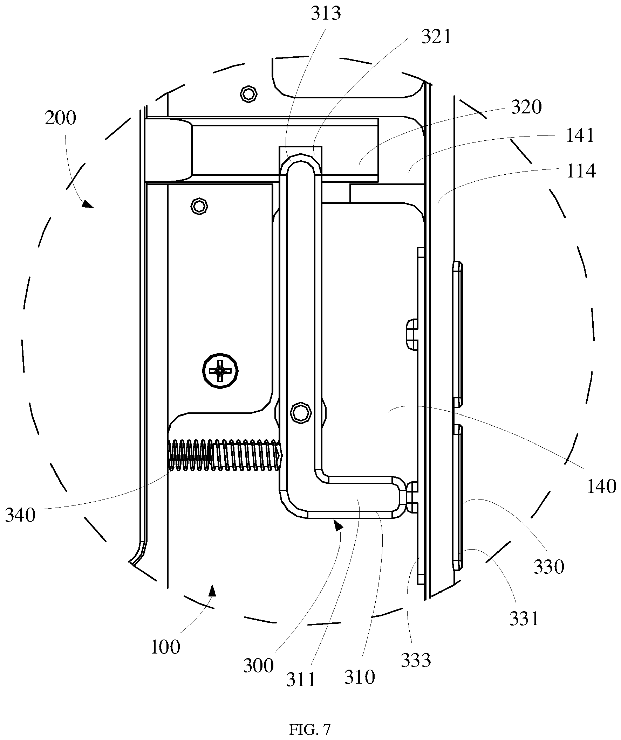

In the embodiment as illustrated in FIG. 1, FIG. 2, and FIG. 3, a mobile terminal 10 is a smart phone. The mobile terminal 10 includes a terminal device 100, an image capturing device 200 and a locking mechanism 300. The terminal device 100 includes a display screen 120, a first power supply module, and a first wireless communication module. The first power supply module is configured to supply power to the display screen 120 and the first wireless communication module. The first display screen 120 is configured to display information and provide an interactive interface for a user. The terminal device 100 defines a mounting recess 130 at one side which is facing away a display area of the display screen 120. As illustrated in FIG. 4 and FIG. 5, the image capturing device 200 includes a casing 210, a camera module 220, a second power supply module 230, and a second wireless communication module. The second power supply module 230 is configured supply power to the camera module 220 and the second wireless communication module. The camera module 220 and the second power supply module 230 are arranged in the casing 210. The camera module 220 has a light incident surface 221, which is exposed from the casing 210. Ambient lights can pass through the light incident surface 221 and enter into a photosensitive element of the camera module 220. The image capturing device 200 can be installed in the mounting recess 130, thereby enabling the light incident surface 221 to be exposed on the side facing away from the display area of the display screen 120. The casing 210 is provided with an engaging slot 211. Referring to FIG. 6 and FIG. 7, the locking mechanism 300 includes a resisting member 310 and a bolt 320, and the resisting member 310 is rotatably connected to the terminal device 100 and abuts against the bolt 320. When the image capturing device 200 is installed in the mounting recess 130, the resisting member 310 is capable of rotating relative to the terminal device 100 thereby driving the bolt 320 to move to a first position and a second position. Referring to FIG. 7, at the first position, the bolt 320 is engaged with the engaging slot 211 and the image capturing device 200 is locked to the terminal device 100. At the second position, the bolt 320 exits from the engaging slot 211 and the image capturing device 200 is capable of being detached from the mounting recess 130. When the image capturing device 200 is capable of being detached from the mounting recess 130, the second wireless communication module can be communicatively connected with the first wireless communication module, thereby achieving the communication between the image capturing device 200 and the terminal device 100.

The first wireless communication module and the second communication module are configured for data transmission between the terminal device 100 and the image capturing device 200. The first wireless communication module and the second wireless communication module may utilize Near Field Communication technology, and the first wireless communication module and the second wireless communication module use the same communication protocol. For example, the first wireless communication module and the second wireless communication module both may be Bluetooth communication modules, or both may be Wireless Fidelity (Wi-Fi) communication modules, or both may be Infrared Data (IrDA) communication modules, or both may be ZigBee communication modules, or both may be Ultra WideBand, or both may be Near Field Communication (NFC) modules, etc. In an alternative embodiment, the terminal device 100 may include a third wireless communication module, which is configured to communicate with an external device such as a base station or another mobile terminal 10, thereby facilitating communication between more than one mobile terminals 10.

When the image capturing device 200 is locked in the mounting recess 130, the image capturing device 200 may communicate with the first wireless communication module by the second wireless communication module, and the camera module 220 at this time can perform functions as a rear camera. A user can perform remote shooting, video recording and other operations through the image capturing device 200. When the image capturing device 200 is detached from the mounting recess 130, the second wireless communication module can still communicate with the first wireless communication module, and the user at this time can use the image capturing device 200 to shoot with any direction in any scene.

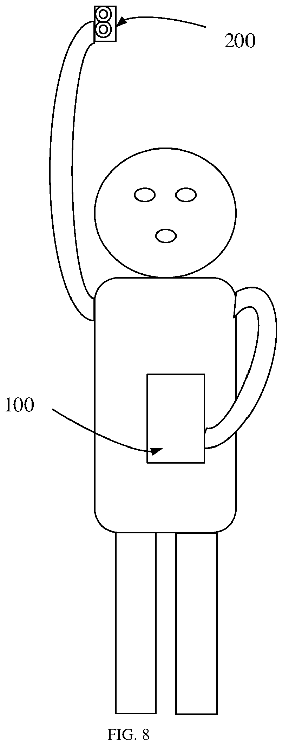

In the above mobile terminal 10, the image capturing device 200 not only can be installed in the mounting recess 130 but also can be released from the mounting recess 130. After the image capturing device 200 is taken out from the mounting recess 130, the image capturing device 200 communicates with the first wireless communication module of the terminal device 100 through the second wireless communication module, and the user can use the image capturing device 200 to shoot in multiple directions and multiple scenarios. In the embodiment as illustrated in FIG. 8, the user can hold the image capturing device 200 with one hand and the terminal device 100 with the other hand, so the user can capture images at various positions and directions through the image capturing device 200, and view the images through the display screen 120 of the terminal device 100. In an alternative embodiment, the user may dispose the image capturing device 200 in a certain place, and view the images captured by the image capturing device 200 through the terminal device 100 in another place. Since the image capturing device 200 can be taken out from the terminal device 100 and maintain in communication with the terminal device 100 after being taken out, the terminal device 100 does not need to provide a front camera on the side that the display screen 120 locates, so the screen-to-body ratio of the terminal device 100 can be increased. For example, the screen-to-body ratio of the terminal device 100 with the above structure may be more than 85%. It can be understood that, the arrangement of the locking mechanism 300 can reliably fix the image capturing device 200 in the mounting recess 130 and can prevent the image capturing device 200 from easily falling out of the mounting recess 130. When the locking mechanism 300 releases the locking to the image capturing device 200, the image capturing device 200 can be taken out of the mounting recess 130, thereby facilitating the usage for the user.

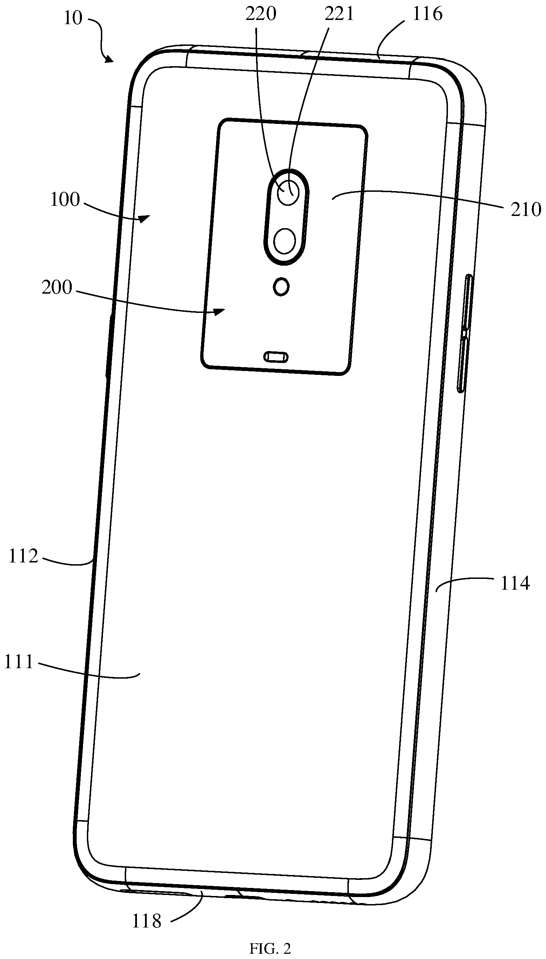

In the embodiments as illustrated in FIG. 1 and FIG. 2, the terminal device 100 is substantially in a shape of cuboid. The mobile terminal 10 includes a rear wall 111 and side walls connected to outer peripheries of the display screen 120. The rear wall 111 is located at the side facing away from the display area and connected to the side walls. The side walls include a left side wall 112, a right side wall 114 opposite to the left side wall 112, a top side wall 116, and a bottom side wall 118 opposite to the top side wall 116. Each of the left side wall 112 and the right side wall 114 are located between the top side wall 116 and the bottom side wall 118. Each of the top side wall 116 and the bottom side wall 118 are located between the left side wall 112 and the right side wall 114. The mounting recess 130 penetrates through the rear side wall 111. The mounting recess 130 is located between the left side wall 112 and the right side wall 114, and also is located between the top side wall 116 and the bottom side wall 118. In one embodiment, the mobile terminal 10 is provided with two locking mechanisms 300, one is located adjacent to the left side wall 112, and the other is located adjacent to the right side wall 114. In the following, the locking mechanism 300 located adjacent to the right side wall 114 is taken as an example for description. However, it can be understood that there may be only one locking mechanism 300 included in the mobile terminal 10.

The terminal device 100 further includes a middle plate 140, the middle plate 140 is positioned between the display screen 120 and the rear wall 111. The resisting member 310 is rotatably connected to the middle plate 140, and the bolt 320 is slidably coupled to the middle plate 140. The middle plate 140 can be integrally formed with the side walls, or can be detachably connected with the side walls. Using the middle plate 140 to support the bolt 320 and the resisting member 310 can improve the structural stability of the locking mechanism 300.

The locking mechanism 300 includes a pressing block 330, which includes a block body 331 and a limit part 333 integrally formed with the block body 331. One of the side walls is provided with an installation hole, the block body 331 engages with the installation hole. The limit part 333 is positioned between the side wall and the resisting member 310, and the side wall and the resisting member 310 can abut the limit part 333 respectively. The pressing block 330 can press the resisting member 310 thereby enabling the resisting member 310 to be rotatable relative to the middle plate 140. In one embodiment, the user presses the pressing block 330, the pressing block 330 presses the resisting member 310, and the resisting member 310 rotates relative to the middle plate 140, so that the bolt 320 can be driven to slide relative to the middle plate 140, meanwhile the bolt 320 is enabled to be capable of being exited from the engaging slot 211. It can be understood that the pressing block 330 is not necessary in the disclosure. As an exemplary alternative embodiment, the resisting member 310 may protrude out and be exposed from the installation hole, so the bolt 320 can also be exited from the engaging slot 211 when the user pressing the resisting member 310.

In one embodiment, the locking mechanism 300 further includes an elastic member 340. One end of the elastic member 340 abuts against the middle plate 140, and the other end of the elastic member 340 abuts against the resisting member 310. The elastic member 340 can press the limit part 333 via the resisting member 310, thereby making the limit part 333 abut against one side wall and the block body 331 protrude from an outer surface of said side wall. Disposing the elastic member 340 can facilitate the return of the pressing block 330 and the bolt 320, so the bolt 320 can be inserted into or exited from the mounting recess 130, the outer surface of the block body 331 can be protruded from the sidewall to facilitate the user to press the pressing block 330, and thereby facilitating the detachment of the image capturing device 200 from the mounting recess 130. The elastic member 340 may be a spring, an elastic piece, an elastic column, or the like. The elastic member 340 can be compressed under the pressing of the resisting member 310. When the pressing block 330 is released, the elastic member 340 can push the pressing block 330 back. It can be understood that the elastic member 340 is not necessary in the disclosure, as in an exemplary alternative embodiment, a structure such as a pull rod may be provided to push the resisting member 310 back into position.

As illustrated in FIG. 7, the bolt 320 is provided with a notch 321. The resisting member 310 includes a first end 311 and a second end 313. The first end 311 abuts against the limit part 333, and the second end 313 is received in the notch 321 and rotatable relative to the bolt 320. Specifically, a cross-section of the second end 313 is arc-shaped, and the second end 313 may be substantially spherical. During the rotation of the resisting member 310 relative to the middle plate 140, the second end 313 is received in the notch 321 and can rotate relative to the bolt 320, thereby avoiding interference with the sliding of the bolt 320. Such a structure facilitates the assembly of the resisting member 310 and the bolt 320. It can be understood that the resisting member 310 can also be rotatably connected with the bolt 320 in an engagement form of a rotating shaft with a shaft hole, which will not be detailed here.

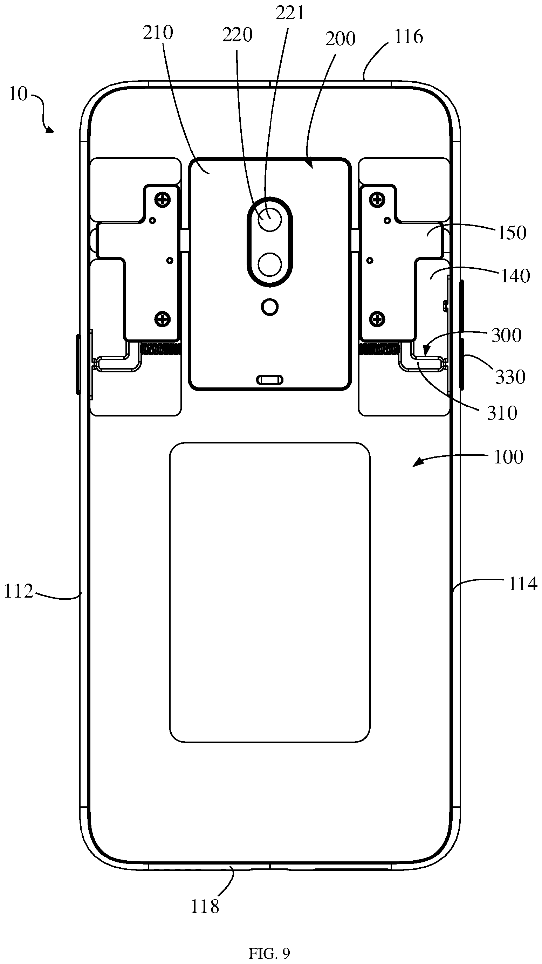

As illustrated in FIG. 7, the middle plate 140 is provided with a sliding groove 141, and the bolt 320 is engaged with and partially provided in the sliding groove 141. Referring to FIG. 9, in one embodiment, the terminal device 100 further includes a cover plate 150 detachably coupled to the middle plate 140, and the cover plate 150 covers the sliding groove 141. The bolt 320 slides in the sliding groove 141, the sliding groove 141 and the cover plate 150 can guide and limit the sliding of the bolt 320, which is beneficial to a smooth movement of the bolt 320. Such a structure also facilitates the assembly and disassembly of the cover plate 150 and the middle plate 140.

Referring to FIG. 4 and FIG. 5, the image capturing device 200 is substantially in a shape of a cuboid. The casing 210 includes a front end surface 213, a rear end surface 215 opposite to the front end surface 213, and side end surfaces connected between the front end surface 213 and the rear end surface 215. The side end surfaces include a left end surface 212, a right end surface 214 opposite to the left end surface 212, a top end surface 216, and a bottom end surface 218 opposite to the top end surface 216. Each of the left end surface 212 and the right end surface 214 is located between the top end surface 216 and the bottom end surface 218, and each of the top end surface 216 and the bottom end surface 218 is located between the left end surface 212 and the right end surface 214. The light incident surface 221 is exposed on the front end surface 213, and the engaging slot 211 is provided in the left end surface 212 and the right end surface 214. When the image capturing device 200 is mounted in the mounting recess 130, the front end surface 213 can be flush with an outer surface of the rear wall 111. Thus, after the image capturing device 200 with such a structure is installed in the mounting recess 130, the mobile terminal 10 can maintain a high overall appearance consistency. In one embodiment, the light incident surface 221 protrudes from the front end surface 213. With such a structure, the portion that the light incident surface 221 of the image capturing device 200 is located, can have a relatively thicker thickness, while other portions of the image capturing device 200 can be made relatively thinner. Therefore, it is beneficial to the lightness and thinness of the image capturing device 200, which in turn is beneficial to the lightness and thinness of the mobile terminal 10.

As one embodiment, the image capturing device 200 may include one or more module contacts, and the terminal device 100 includes one or more device contacts. When the image capturing device 200 is installed in the mounting recess 130, the module contacts can be in contact with the device contacts respectively, so that the terminal device 100 can charge the image capturing device 200. Such a structure facilitates the terminal device 100 to charge the image capturing device 200 and is beneficial for the image capturing device 200 to retain sufficient power for the convenience of the user. It is understood that the module contacts and/or the device contacts may be metal contacts, and the module contacts and the device contacts may have various structural forms. For example, the image capturing device 200 may define small holes and metal contacts can be respectively installed therein as the module contacts, the terminal device 100 can be provided with protruding metal contacts as the device contacts, thereby realizing the charging of the terminal device 100 to the image capturing device 200 through the cooperation of the module contacts and the device contacts.

Referring to FIG. 4 and FIG. 5, a module main board 240 is provided in the casing 210. The front end surface 213 of the casing 210 is provided with a light exit hole 217, and the light incident surface 221 is exposed from the light exit hole 217. The second power supply module 230 is stacked on the module main board 240 and can supply power to the module main board 240. The module main board 240 can respectively communicate with the camera module 220 and the second wireless communication module. The module main board 240 may include a circuit board and a number of electronic components connected to the circuit board. The module main board 240 is configured to process image information captured by the camera module 220 and send it to the terminal device 100 through the second wireless communication module. The module main board 240 is substantially U-shaped and defines a gap 241 thereby. The camera module 220 includes a lens barrel 223, and the lens barrel 223 penetrates the gap 241. Such a design can avoid stacking the lens barrel 223 on the module main board 240, thereby making internal components in the image capturing device 200 be more compact arrange, it is beneficial to reduce a thickness of the image capturing device 200.

Furthermore, the second power supply module 230 is provided with a through hole 221, so the second power supply module 230 is substantially annular. The through hole 221 communicates with the gap 241, and the lens barrel 223 penetrates the through hole 221 and the gap 241 thereby receiving in the through hole 221 and the gap 241. Such a structure can avoid stacking the lens barrel 223 on the second power supply module 230, thus making the arrangement of internal components in the image capturing device 200 be more compact, and reducing the thickness of the image capturing device 200. It can be understood that the first power module and the second power supply module 230 each include a battery that can be repeatedly charged and discharged, such as a lithium battery. In other embodiments, the first power module and the second power supply module 230 each may also be a fuel cell or other batteries, and the second power supply module 230 may be connected to the module main board 240 through a power flexible printed circuit board, thereby enabling the second power supply module 230 supply power to the module main board 240, and details are not repeated here.

Technical features of the above-mentioned embodiments can be combined arbitrarily. In order to make the description concise, all possible combinations of the various technical features in the above-mentioned embodiments are not described.

## Claims

1. A mobile terminal (10), comprising:
a terminal device (100), comprising a display screen (120), a first power supply module, and a first wireless communication module, wherein the first power supply module is configured to supply power to the display screen (120) and the first wireless communication module, the terminal device (100) defines a mounting recess (130) on the side thereof facing away from a display area of the display screen (120), the terminal device (100) comprises a rear wall (111) and a middle plate (140), and the middle plate (140) is positioned between the display screen (120) and the rear wall (111);
an image capturing device (200), comprising a casing (210), a camera module (220), a second power supply module (230), and a second wireless communication module, wherein the second power supply module (230) is configured to supply power to the camera module (220) and the second wireless communication module, the camera module (220) and the second power supply module (230) are disposed in the casing (210), the camera module (220) has a light incident surface (221) exposed from the casing (210); the image capturing device (200) is configured to be mounted in the mounting recess (130), thereby making the light incident surface (221) be exposed on the side facing away from the display area; the casing (210) is provided with an engaging slot (211); and
a locking mechanism (300), comprising a resisting member (310) and a bolt (320), wherein the resisting member (310) is rotatably connected to the terminal device (100) by rotatably connected to the middle plate (140), and abuts against the bolt (320); when the image capturing device (200) is mounted in the mounting recess (130), the resisting member (310) is rotatable relative to the terminal device (100) thereby driving the bolt (320) to move to a first position and a second position, the bolt (320) is engaged with the engaging slot (211) and the image capturing device (200) is locked to the terminal device (100) when the bolt (320) is at the first position, the bolt (320) exits from the engaging slot (211) and the image capturing device (200) is detachable from the mounting recess (130) when the bolt (320) is at the second position; the second wireless communication module is communicatively connected with the first wireless communication module after the image capturing device (200) being detached from the mounting recess (130);
**characterized in that**
the bolt (320) is slidably coupled with the middle plate (140), the middle plate (140) is provided with a sliding groove (141), and the bolt (320) engages with the sliding groove (141).

2. The mobile terminal (10) as claimed in claim 1, wherein the terminal device (100) comprises side walls connected to outer peripheries of the display screen (120), the rear wall (111) is connected with the side walls and located at the side facing away from the display area; the side walls includes a left side wall (112), a right side wall (114) opposite to the left side wall (112), a top side wall (116), and a bottom side wall (118) opposite to the top side wall (116), the left side wall (112) and the right side wall (114) are both located between the top side wall (116) and the bottom side wall (118), the top side wall (116) and the bottom side wall (118) are both located between the left side wall (112) and the right side wall (114); the mounting recess (130) penetrates the rear wall (111), the mounting recess (130) is located between the left side wall (112) and the right side wall (114), and the mounting recess (130) is located between the top side wall (116) and the bottom side wall (118).

3. The mobile terminal (10) as claimed in claim 1, wherein a front end surface (213) of the casing (210) is provided with a light exit hole (217), and the light incident surface (221) is exposed from the light exit hole (217).

4. The mobile terminal (10) as claimed in claim 1, wherein the terminal device (100) further comprises side walls connected with the rear wall (111), the locking mechanism (300) comprises a pressing block (330), the pressing block (330) comprises a block body (331) and a limit part (333) integrally formed with the block body (331); one of the side walls is provided with an installation hole, the block body (331) engages with the installation hole; the limit part (333) is positioned between the resisting member (310) and the side wall, the side wall and the resisting member (310) are respectively abut against the limit part (333), the pressing block (330) presses against the resisting member (310), thereby enabling the resisting member (310) to be rotatable relative to the middle plate (140).

5. The mobile terminal (10) as claimed in claim 4, wherein the locking mechanism (300) comprises an elastic member (340), one end of the elastic member (340) abuts against the middle plate (140), and the other end of the elastic member (340) abuts against the resisting member (310), the elastic member (340) presses the limit part (333) through the resisting member (310), thereby making the limit part (333) press against the side wall and making the block body (331) protrude from an outer surface of the side wall.

6. The mobile terminal (10) according to claim 4, wherein the bolt (320) is provided with a notch (321), the resisting member (310) comprises a first end (311) and a second end (313), the first end (311) abuts against the limit part (333), and the second end (313) is received in the notch (321) and rotatable relative to the bolt (320).

7. The mobile terminal (10) as claimed in claim 1, wherein the terminal device (100) comprises a cover plate (150) detachably coupled with the middle plate (140), and the cover plate (150) covers the sliding groove (141).

8. The mobile terminal (10) as claimed in claim 2, wherein the casing (210) includes a front end surface (213), a rear end surface (215) opposite to the front end surface (213), and side end surfaces connected between the front end surface (213) and the rear end surface (215), the side end surfaces comprises a left end surface (212), a right end surface (214) opposite to the left end surface (212), a top end surface (216), and a bottom end surface (218) opposite to the top end surface (216), the left end surface (212) and the right end surface (214) are both located between the top end surface (216) and the bottom end surface (218), the top end surface (216) and the bottom end surface (218) are both located between the left end surface (212) and the right end surface (214); the light incident surface (221) is exposed on the front end surface (213), the front end surface (213) is flush with an outer surface of the rear wall (111) when the image capturing device (200) is mounted in the mounting recess (130).

9. The mobile terminal (10) as claimed in claim 1, wherein the image capturing device (200) comprises one or more module contacts, the terminal device (100) comprises one or more device contacts, the module contacts are in contact with the device contacts when the image capturing device (200) is mounted in the mounting recess (130), thereby charging the image capturing device (200) from the terminal device (100).

10. The mobile terminal (10) according to claim 1, wherein the image capturing device (200) comprises a module main board (240) disposed in the casing (210), the second power supply module (230) is stacked on the module main board (240) and configured to supply power for the module main board (240), the module main board (240) respectively communicates with the camera module (220) and the second wireless communication module; the module main board (240) is U-shaped and defines a gap (241) thereby, the camera module (220) comprises a lens barrel (223), and the lens barrel (223) engages with the gap (241).

11. The mobile terminal (10) as claimed in claim 10, wherein the second power supply module (230) is provided with a through hole (231), the through hole (231) communicates with the gap (241), and the lens barrel (223) engages with the through hole (231).

12. The mobile terminal (10) as claimed in claim 1, wherein the first wireless communication module and the second wireless communication module are both Bluetooth communication modules, WiFi communication modules, ZigBee communication modules, or NFC communication modules.

13. The mobile terminal (10) as claimed in claim 1, wherein the image capturing device (200) comprises a module main board (240) connected with the camera module (220), the second power supply module (230) is stacked on the module main board (240), the module main board (240) defines a gap (241), the second power supply module (230) is provided with a through hole (231), the through hole (231) communicates with the gap (241), and a lens barrel (223) of the camera module (220) engages with the through hole (231) and the gap (241).

14. The mobile terminal (10) as claimed in claim 1, wherein the front end surface (213) is flush with an outer surface of the rear wall (111) when the image capturing device (200) is mounted in the mounting recess (130), the mounting recess (130) is exposed from the rear wall (111), and the resisting member (310) is rotatably mounted on the middle plate (140).

15. The mobile terminal (10) as claimed in claim 14, wherein the locking mechanism (300) further comprises a pressing block (330) and an elastic member (340), the terminal device (100) further comprises a side wall connected between the rear wall (111) and the display screen (120), the side wall is provided with an installation hole, and the pressing block (330) is movably engaged with the installation hole, one end of the elastic member (340) abuts against the middle plate (140), and the other end of the elastic member (340) abuts against the resisting member (310).

## Patentansprüche

1. Mobiles Endgerät (10), das Folgendes umfasst:
eine Endgerätvorrichtung (100), die einen Bildschirm (120), ein erstes Stromversorgungsmodul und ein erstes Drahtloskommunikationsmodul umfasst, wobei das erste Stromversorgungsmodul konfiguriert ist, um den Bildschirm (120) und das erste Drahtloskommunikationsmodul mit Strom zu versorgen, die Endgerätvorrichtung (100) eine Befestigungsausnehmung (130) auf der von einem Bildschirmbereich des Bildschirms (120) abgewandten Seite davon definiert, die Endgerätvorrichtung (100) eine Rückwand (111) und eine Mittelplatte (140) umfasst und die Mittelplatte (140) zwischen dem Bildschirm (120) und der Rückwand (111) positioniert ist;
eine Bildaufnahmevorrichtung (200), die ein Gehäuse (210), ein Kameramodul (220), ein zweites Stromversorgungsmodul (230) und ein zweites Drahtloskommunikationsmodul umfasst, wobei das zweite Stromversorgungsmodul (230) konfiguriert ist, um das Kameramodul (220) und das zweite Drahtloskommunikationsmodul mit Strom zu versorgen, das Kameramodul (220) und das zweite Stromversorgungsmodul (230) in dem Gehäuse (210) platziert sind, das Kameramodul (220) eine auf dem Gehäuse (210) freiliegende Lichteinfallsfläche (221) aufweist; wobei die Bildaufnahmevorrichtung (200) so konfiguriert ist, dass sie sich in der Befestigungsausnehmung (130) befestigen lässt, wodurch bewirkt wird, dass die Lichteinfallsfläche (221) auf der von dem Bildschirmbereich abgewandten Seite freiliegt; wobei das Gehäuse (210) mit einem Eingriffsschlitz (211) versehen ist; und
einen Arretiermechanismus (300), der ein widerstandsfähiges Bauelement (310) und einen Bolzen (320) umfasst, wobei das widerstandsfähige Bauelement (310) mit der Endgerätvorrichtung (100) drehbar verbunden ist, indem es mit der Mittelplatte (140) drehbar verbunden ist, und an den Bolzen (320) anstößt; wobei das widerstandsfähige Bauelement (310), wenn die Bildaufnahmevorrichtung (200) in der Befestigungsausnehmung (130) befestigt ist, relativ zu der Endgerätvorrichtung (100) drehbar ist, wodurch der Bolzen (320) angetrieben wird, sodass er sich zu einer ersten Position und einer zweiten Position hin bewegt, der Bolzen (320) mit dem Eingriffsschlitz (211) in Eingriff gebracht und die Bildaufnahmevorrichtung (200) an der Endgerätvorrichtung (100) arretiert wird, wenn der Bolzen (320) an der ersten Position ist, der Bolzen (320) aus dem Eingriffsschlitz (211) herausgeht und die Bildaufnahmevorrichtung (200) in der Befestigungsausnehmung (130) lösbar ist, wenn der Bolzen (320) an der zweiten Position ist; wobei das zweite Drahtloskommunikationsmodul mit dem ersten Drahtloskommunikationsmodul kommunikativ verbunden ist, nachdem die Bildaufnahmevorrichtung (200) in der Befestigungsausnehmung (130) gelöst worden ist;
**dadurch gekennzeichnet, dass**
der Bolzen (320) mit der Mittelplatte (140) verschiebbar gekoppelt ist, die Mittelplatte (140) mit einer Schiebenut (141) versehen ist und der Bolzen (320) in die Schiebenut (141) eingreift.

2. Mobiles Endgerät (10) nach Anspruch 1, wobei die Endgerätvorrichtung (100) mit Außenrändern des Bildschirms (120) verbundene Seitenwände umfasst, die Rückwand (111) mit den Seitenwänden verbunden ist und sich an der von dem Bildschirmbereich abgewandten Seite befindet; wobei die Seitenwände eine linke Seitenwand (112), eine rechte Seitenwand (114) gegenüber der linken Seitenwand (112), eine obere Seitenwand (116) und eine untere Seitenwand (118) gegenüber der oberen Seitenwand (116) enthalten, die linke Seitenwand (112) und die rechte Seitenwand (114) sich beide zwischen der oberen Seitenwand (116) und der unteren Seitenwand (118) befinden, die obere Seitenwand (116) und die untere Seitenwand (118) sich beide zwischen der linken Seitenwand (112) und der rechten Seitenwand (114) befinden; wobei die Befestigungsausnehmung (130) die Rückwand (111) durchdringt, die Befestigungsausnehmung (130) sich zwischen der linken Seitenwand (112) und der rechten Seitenwand (114) befindet und die Befestigungsausnehmung (130) sich zwischen der oberen Seitenwand (116) und der unteren Seitenwand (118) befindet.

3. Mobiles Endgerät (10) nach Anspruch 1, wobei eine vordere Endfläche (213) des Gehäuses (210) mit einer Lichtaustrittsöffnung (217) versehen ist und die Lichteinfallsfläche (221) über der Lichtaustrittsöffnung (217) freiliegt.

4. Mobiles Endgerät (10) nach Anspruch 1, wobei die Endgerätvorrichtung (100) ferner mit der Rückwand (111) verbundene Seitenwände umfasst, der Arretiermechanismus (300) ein Druckstück (330) umfasst, das Druckstück (330) einen Druckstückkörper (331) und ein mit dem Druckstückkörper (331) einstückig ausgebildetes Begrenzungsteil (333) umfasst; wobei eine der Seitenwände mit einer Montageöffnung versehen ist, der Druckstückkörper (331) in die Montageöffnung eingreift, das Begrenzungsteil (333) zwischen dem widerstandsfähigen Bauelement (310) und der Seitenwand positioniert ist, die Seitenwand und das widerstandsfähige Bauelement (310) jeweils an das Begrenzungsteil (333) anstoßen und das Druckstück (330) gegen das widerstandsfähige Bauelement (310) drückt, wodurch ermöglicht wird, dass das widerstandsfähige Bauelement (310) relativ zu der Mittelplatte (140) drehbar ist.

5. Mobiles Endgerät (10) nach Anspruch 4, wobei der Arretiermechanismus (300) ein elastisches Bauelement (340) umfasst, ein Ende des elastischen Bauelements (340) an die Mittelplatte (140) anstößt und das andere Ende des elastischen Bauelements (340) an das widerstandsfähige Bauelement (310) anstößt und das elastische Bauelement (340) das Begrenzungsteil (333) durch das widerstandsfähige Bauelement (310) drückt, wodurch bewirkt wird, dass das Begrenzungsteil (333) gegen die Seitenwand drückt, und bewirkt wird, dass der Druckstückkörper (331) von einer Außenfläche der Seitenwand vorsteht.

6. Mobiles Endgerät (10) nach Anspruch 4, wobei der Bolzen (320) mit einer Aussparung (321) versehen ist, das widerstandsfähige Bauelement (310) ein erstes Ende (311) und ein zweites Ende (313) umfasst, das erste Ende (311) an das Begrenzungsteil (333) anstößt und das zweite Ende (313) in der Aussparung (321) aufgenommen wird und relativ zu dem Bolzen (320) drehbar ist.

7. Mobiles Endgerät (10) nach Anspruch 1, wobei die Endgerätvorrichtung (100) eine mit der Mittelplatte (140) lösbar gekoppelte Abdeckplatte (150) umfasst und die Abdeckplatte (150) die Schiebenut (141) abdeckt.

8. Mobiles Endgerät (10) nach Anspruch 2, wobei das Gehäuse (210) eine vordere Endfläche (213), eine hintere Endfläche (215) gegenüber der vorderen Endfläche (213) und zwischen der vorderen Endfläche (213) und der hinteren Endfläche (215) verbundene seitliche Endflächen enthält, die seitlichen Endflächen eine linke Endfläche (212), eine rechte Endfläche (214) gegenüber der linken Endfläche (212), eine obere Endfläche (216) und eine untere Endfläche (218) gegenüber der oberen Endfläche (216) umfassen, die linke Endfläche (212) und die rechte Endfläche (214) sich beide zwischen der oberen Endfläche (216) und der unteren Endfläche (218) befinden und die obere Endfläche (216) und die untere Endfläche (218) sich beide zwischen der linken Endfläche (212) und der rechten Endfläche (214) befinden; wobei die Lichteinfallsfläche (221) auf der vorderen Endfläche (213) freiliegt und die vordere Endfläche (213) und eine Außenfläche der Rückwand (111) in einer Ebene liegen, wenn die Bildaufnahmevorrichtung (200) in der Befestigungsausnehmung (130) befestigt ist.

9. Mobiles Endgerät (10) nach Anspruch 1, wobei die Bildaufnahmevorrichtung (200) einen oder mehrere Modulkontakte umfasst, die Endgerätvorrichtung (100) einen oder mehrere Vorrichtungskontakte umfasst und die Modulkontakte mit den Vorrichtungskontakten in Kontakt stehen, wenn die Bildaufnahmevorrichtung (200) in der Befestigungsausnehmung (130) befestigt ist, wodurch die Bildaufnahmevorrichtung (200) von der Endgerätvorrichtung (100) aufgeladen wird.

10. Mobiles Endgerät (10) nach Anspruch 1, wobei die Bildaufnahmevorrichtung (200) eine in dem Gehäuse (210) platzierte Modulhauptplatine (240) umfasst, die Modulhauptplatine (240) mit dem zweiten Stromversorgungsmodul (230), das konfiguriert ist, um die Modulhauptplatine (240) mit Strom zu versorgen, bestückt ist und die Modulhauptplatine (240) jeweils mit dem Kameramodul (220) und dem zweiten Drahtloskommunikationsmodul in Verbindung steht; wobei die Modulhauptplatine (240) U-förmig ist und dadurch einen Zwischenraum (241) definiert, das Kameramodul (220) einen Objektivtubus (223) umfasst und der Objektivtubus (223) in den Zwischenraum (241) eingreift.

11. Mobiles Endgerät (10) nach Anspruch 10, wobei das zweite Stromversorgungsmodul (230) mit einer Durchgangsöffnung (231) versehen ist, die Durchgangsöffnung (231) mit dem Zwischenraum (241) in Verbindung steht und der Objektivtubus (223) in die Durchgangsöffnung (231) eingreift.

12. Mobiles Endgerät (10) nach Anspruch 1, wobei sowohl das erste Drahtloskommunikationsmodul als auch das zweite Drahtloskommunikationsmodul Bluetooth-Kommunikationsmodule, WiFi-Kommunikationsmodule, ZigBee-Kommunikationsmodule oder NFC-Kommunikationsmodule sind.

13. Mobiles Endgerät (10) nach Anspruch 1, wobei die Bildaufnahmevorrichtung (200) eine mit dem Kameramodul (220) verbundene Modulhauptplatine (240) umfasst, die Modulhauptplatine (240) mit dem zweiten Stromversorgungsmodul (230) bestückt ist, die Modulhauptplatine (240) einen Zwischenraum (241) definiert, das zweite Stromversorgungsmodul (230) mit einer Durchgangsöffnung (231) versehen ist, die Durchgangsöffnung (231) mit dem Zwischenraum (241) in Verbindung steht und ein Objektivtubus (223) des Kameramoduls (220) in die Durchgangsöffnung (231) und den Zwischenraum (241) eingreift.

14. Mobiles Endgerät (10) nach Anspruch 1, wobei die vordere Endfläche (213) und eine Außenfläche der Rückwand (111) in einer Ebene liegen, wenn die Bildaufnahmevorrichtung (200) in der Befestigungsausnehmung (130) befestigt ist, die Befestigungsausnehmung (130) auf der Rückwand (111) freiliegt und das widerstandsfähige Bauelement (310) auf der Mittelplatte (140) drehbar befestigt ist.

15. Mobiles Endgerät (10) nach Anspruch 14, wobei der Arretiermechanismus (300) ferner ein Druckstück (330) und ein elastisches Bauelement (340) umfasst, die Endgerätvorrichtung (100) ferner eine zwischen der Rückwand (111) und dem Bildschirm (120) verbundene Seitenwand umfasst, die Seitenwand mit einer Montageöffnung versehen ist und das Druckstück (330) in die Montageöffnung beweglich eingreift, ein Ende des elastischen Bauelements (340) an die Mittelplatte (140) anstößt und das andere Ende des elastischen Bauelements (340) an das widerstandsfähige Bauelement (310) anstößt.

## Revendications

1. Terminal mobile (10), comportant :
un dispositif terminal (100), comportant un écran (120) d'affichage, un premier module d'alimentation électrique, et un premier module de communication sans fil, le premier module d'alimentation électrique étant configuré pour alimenter en électricité l'écran (120) d'affichage et le premier module de communication sans fil, le dispositif terminal (100) définissant un évidement (130) de montage sur son côté orienté à l'opposé d'une zone d'affichage de l'écran (120) d'affichage, le dispositif terminal (100) comportant une paroi arrière (111) et une plaque intermédiaire (140), et la plaque intermédiaire (140) étant positionnée entre l'écran (120) d'affichage et la paroi arrière (111) ;
un dispositif (200) de capture d'images, comportant un boîtier (210), un module (220) de caméra, un second module (230) d'alimentation électrique, et un second module de communication sans fil, le second module (230) d'alimentation électrique étant configuré pour alimenter en électricité le module (220) de caméra et le second module de communication sans fil, le module (220) de caméra et le second module (230) d'alimentation électrique étant disposés dans le boîtier (210), le module (220) de caméra présentant une surface (221) d'incidence de lumière exposée par rapport au boîtier (210) ; le dispositif (200) de capture d'images étant configuré pour être monté dans l'évidement (130) de montage, amenant ainsi la surface (221) d'incidence de lumière à être exposée sur son côté orienté à l'opposé de la zone d'affichage ; le boîtier (210) étant muni d'une rainure (211) d'interaction ; et
un mécanisme (300) de verrouillage, comportant un élément résistant (310) et un pêne (320), l'élément résistant (310) étant en liaison pivot avec le dispositif terminal (100) du fait de sa liaison pivot avec la plaque intermédiaire (140), et prenant appui contre le pêne (320) ; l'élément résistant (310) pouvant, lorsque le dispositif (200) de capture d'images est monté dans l'évidement (130) de montage, pivoter par rapport au dispositif terminal (100), entraînant ainsi le pêne (320) pour qu'il prenne une première position et une seconde position, le pêne (320) étant en interaction avec la rainure (211) d'interaction et le dispositif (200) de capture d'images étant verrouillé sur le dispositif terminal (100) lorsque le pêne (320) est dans la première position, le pêne (320) sortant de la rainure (211) d'interaction et le dispositif (200) de capture d'images pouvant être détaché de l'évidement (130) de montage lorsque le pêne (320) est dans la seconde position ; le second module de communication sans fil étant relié de façon à communiquer avec le premier module de communication sans fil après que le dispositif (200) de capture d'images a été détaché de l'évidement (130) de montage ;
**caractérisé en ce que**
le pêne (320) est couplé de façon coulissante avec la plaque intermédiaire (140), la plaque intermédiaire (140) est munie d'une rainure (141) de coulissement, et le pêne (320) interagit avec la rainure (141) de coulissement.

2. Terminal mobile (10) selon la revendication 1, le dispositif terminal (100) comportant des parois latérales liées à des périphéries extérieures de l'écran (120) d'affichage, la paroi arrière (111) étant liée aux parois latérales et située du côté orienté à l'opposé de la zone d'affichage ; les parois latérales comprenant une paroi latérale gauche (112), une paroi latérale droite (114) opposée à la paroi latérale gauche (112), une paroi (116) de face supérieure, et une paroi (118) de face inférieure opposée à la paroi (116) de face supérieure, la paroi latérale gauche (112) et la paroi latérale droite (114) étant toutes deux situées entre la paroi (116) de face supérieure et la paroi (118) de face inférieure, la paroi (116) de face supérieure et la paroi (118) de face inférieure étant toutes deux situées entre la paroi latérale gauche (112) et la paroi latérale droite (114) ; l'évidement (130) de montage traversant la paroi arrière (111), l'évidement (130) de montage étant situé entre la paroi latérale gauche (112) et la paroi latérale droite (114), et l'évidement (130) de montage étant située entre la paroi (116) de face supérieure et la paroi (118) de face inférieure.

3. Terminal mobile (10) selon la revendication 1, une surface (213) d'extrémité avant du boîtier (210) étant munie d'un trou (217) de sortie de lumière, et la surface (221) d'incidence de lumière étant exposée par rapport au trou (217) de sortie de lumière.

4. Terminal mobile (10) selon la revendication 1, le dispositif terminal (100) comportant en outre des parois latérales liées à la paroi arrière (111), le mécanisme (300) de verrouillage comportant un bloc (330) de pression, le bloc (330) de pression comportant un corps (331) de bloc et une partie (333) de limite formée d'un seul tenant avec le corps (331) de bloc ; une des parois latérales étant munie d'un trou d'installation, le corps (331) de bloc interagissant avec le trou d'installation ; la partie (333) de limite étant positionnée entre l'élément résistant (310) et la paroi latérale, la paroi latérale et l'élément résistant (310) étant respectivement en appui contre la partie (333) de limite, le bloc (330) de pression appuyant contre l'élément résistant (310), permettant ainsi à l'élément résistant (310) de pouvoir pivoter par rapport à la plaque intermédiaire (140).

5. Terminal mobile (10) selon la revendication 4, le mécanisme (300) de verrouillage comportant un élément élastique (340), une extrémité de l'élément élastique (340) prenant appui contre la plaque intermédiaire (140), et l'autre extrémité de l'élément élastique (340) prenant appui contre l'élément résistant (310), l'élément élastique (340) enfonçant la partie (333) de limite à travers l'élément résistant (310), amenant ainsi la partie (333) de limite à appuyer contre la paroi latérale et faisant dépasser le corps (331) de bloc d'une surface extérieure de la paroi latérale.

6. Terminal mobile (10) selon la revendication 4, le pêne (320) étant muni d'une encoche (321), l'élément résistant (310) comportant une première extrémité (311) et une seconde extrémité (313), la première extrémité (311) prenant appui contre la partie (333) de limite, et la seconde extrémité (313) étant logée dans l'encoche (321) et pouvant pivoter par rapport au pêne (320) .

7. Terminal mobile (10) selon la revendication 1, le dispositif terminal (100) comportant une plaque (150) de couverture couplée de façon détachable à la plaque intermédiaire (140), et la plaque (150) de couverture recouvrant la rainure (141) de coulissement.

8. Terminal mobile (10) selon la revendication 2, le boîtier (210) comprenant une surface (213) d'extrémité avant, une surface (215) d'extrémité arrière opposée à la surface (213) d'extrémité avant, et des surfaces d'extrémités latérales reliées entre la surface (213) d'extrémité avant et la surface (215) d'extrémité arrière, les surfaces d'extrémités latérales comportant une surface (212) d'extrémité gauche, une surface (214) d'extrémité droite opposée à la surface (212) d'extrémité gauche, une surface (216) d'extrémité supérieure, et une surface (218) d'extrémité inférieure opposée à la surface (216) d'extrémité supérieure, la surface (212) d'extrémité gauche et la surface (214) d'extrémité droite étant toutes deux situées entre la surface (216) d'extrémité supérieure et la surface (218) d'extrémité inférieure, la surface (216) d'extrémité supérieure et la surface (218) d'extrémité inférieure étant toutes deux situées entre la surface (212) d'extrémité gauche et la surface (214) d'extrémité droite ; la surface (221) d'incidence de lumière étant exposée sur la surface (213) d'extrémité avant, la surface (213) d'extrémité avant affleurant une surface extérieure de la paroi arrière (111) lorsque le dispositif (200) de capture d'images est monté dans l'évidement (130) de montage.

9. Terminal mobile (10) selon la revendication 1, le dispositif (200) de capture d'images comportant un ou plusieurs contacts de module, le dispositif terminal (100) comportant un ou plusieurs contacts de dispositif, les contacts de module étant en contact avec les contacts de dispositif lorsque le dispositif (200) de capture d'images est monté dans l'évidement (130) de montage, chargeant ainsi le dispositif (200) de capture d'images à partir du dispositif terminal (100).

10. Terminal mobile (10) selon la revendication 1, le dispositif (200) de capture d'images comportant une carte principale (240) de module disposée dans le boîtier (210), le second module (230) d'alimentation électrique étant superposé à la carte principale de module (240) et configuré pour alimenter en électricité la carte principale (240) de module, la carte principale (240) de module communiquant respectivement avec le module (220) de caméra et le second module de communication sans fil ; la carte principale (240) de module étant en forme de U et définissant ainsi un écartement (241), le module (220) de caméra comportant un fourreau (223) d'objectif, et le fourreau (223) d'objectif interagissant avec l'écartement (241).

11. Terminal mobile (10) selon la revendication 10, le second module (230) d'alimentation électrique étant muni d'un trou débouchant (231), le trou débouchant (231) communiquant avec l'écartement (241), et le fourreau (223) d'objectif interagissant avec le trou débouchant (231).

12. Terminal mobile (10) selon la revendication 1, le premier module de communication sans fil et le second module de communication sans fil étant tous deux des modules de communication Bluetooth, des modules de communication Wi-Fi, des modules de communication ZigBee ou des modules de communication NFC.

13. Terminal mobile (10) selon la revendication 1, le dispositif (200) de capture d'images comportant une carte principale (240) de module reliée au module (220) de caméra, le second module (230) d'alimentation électrique étant superposé à la carte principale (240) de module, la carte principale (240) de module définissant un écartement (241), le second module (230) d'alimentation électrique étant muni d'un trou débouchant (231), le trou débouchant (231) communiquant avec l'écartement (241), et un fourreau (223) d'objectif du module (220) de caméra interagissant avec le trou débouchant (231) et l'écartement (241).

14. Terminal mobile (10) selon la revendication 1, la surface (213) d'extrémité avant affleurant une surface extérieure de la paroi arrière (111) lorsque le dispositif (200) de capture d'images est monté dans l'évidement (130) de montage, l'évidement (130) de montage étant exposé par rapport à la paroi arrière (111), et l'élément résistant (310) étant monté de façon pivotante sur la plaque intermédiaire (140).

15. Terminal mobile (10) selon la revendication 14, le mécanisme (300) de verrouillage comportant en outre un bloc (330) de pression et un élément élastique (340), le dispositif terminal (100) comportant en outre une paroi latérale reliée entre la paroi arrière (111) et l'écran (120) d'affichage, la paroi latérale étant munie d'un trou d'installation, et le bloc (330) de pression étant en interaction mobile avec le trou d'installation, une extrémité de l'élément élastique (340) prenant appui contre la plaque intermédiaire (140), et l'autre extrémité de l'élément élastique (340) prenant appui contre l'élément résistant (310).
